# EUROPEAN PATENT APPLICATION

(11) **EP 4 759 691 A1**
(43) Date of publication of application: **17.06.2026**
(21) Application number: 25207109.7
(22) Date of filing: 07.10.2025
(51) Int. Cl.: B62D 65/00, B62D 65/18, G05D 1/698, G06Q 50/04

(54) **INSPECTION SYSTEM**

(30) Priority: 10.12.2024 JP 2024215399
(71) Applicant: TOYOTA JIDOSHA KABUSHIKI KAISHA, Toyota-shi, Aichi-ken 471-8571 (JP)
(72) Inventor: SAITO, Yasuhiro, Kariya-shi, 448-0002 (JP)
(74) Representative: TBK

(57) **Abstract**

An inspection system includes: a vehicle (100) configured to travel by unattended driving control; and a control unit (210) configured to operate one or more actuators mounted on the vehicle by the unattended driving control. The control unit is configured to, during an undercarriage inspection of the vehicle, operate the actuator corresponding to an inspection portion of the vehicle by the unattended driving control.

## Description

### 1. Field of the Invention

The present disclosure relates to an inspection system.

### 2. Description of Related Art

### (Background Art)

Japanese Unexamined Patent Application Publication (Translation of PCT Application) No. 2017-538619 (JP 2017-538619 A) discloses a technology of causing a vehicle to travel autonomously or through remote control during a vehicle manufacturing process.

### SUMMARY OF THE INVENTION

At vehicle manufacturing factories and inspection facilities, vehicle undercarriage inspections may be executed. The undercarriage inspection includes an inspection step that involves operating a vehicle, such as a step of checking for brake fluid leakage while operating a brake pedal. Hitherto, such an inspection step has required manpower on board to operate vehicles.

The present disclosure can be realized as the following aspects.
(1) One aspect of the present disclosure provides an inspection system. The inspection system includes: a vehicle configured to travel by unattended driving control; and a control unit configured to operate one or more actuators mounted on the vehicle by the unattended driving control. The control unit is configured to, during an undercarriage inspection of the vehicle, operate the actuator corresponding to an inspection portion of the vehicle. According to this aspect, the undercarriage inspection can be executed by operating the actuator corresponding to the inspection portion of the vehicle by the unattended driving control. Thus, the manpower can be saved in the undercarriage inspection.
(2) In the above aspect, the control unit may be configured to: determine whether an operation state of an inspection device to be used to inspect the inspection portion is a predetermined state; and operate the actuator corresponding to the inspection portion when determination is made that the operation state is the predetermined state. In this aspect, the actuator corresponding to the inspection portion can be operated after checking the operation state of the inspection device to be used to inspect the inspection portion. Thus, an appropriate undercarriage inspection can be executed more reliably.
(3) In the above aspect, the control unit may be configured to: determine whether an inspection operator who is supposed to inspect the inspection portion is present at a predetermined inspection position; and operate the actuator corresponding to the inspection portion when determination is made that the inspection operator is present at the inspection position. In this aspect, the actuator corresponding to the inspection portion can be operated after checking the position of the inspection operator who is supposed to inspect the inspection portion. Thus, an appropriate undercarriage inspection can be executed more reliably.
(4) In the above aspect, the control unit may be configured to: determine whether a motion state of an inspection operator who is supposed to inspect the inspection portion is a predetermined state; and operate the actuator corresponding to the inspection portion when determination is made that the motion state is the predetermined state. In this aspect, the actuator corresponding to the inspection portion can be operated after checking the motion state of the inspection operator who is supposed to inspect the inspection portion. Thus, an appropriate undercarriage inspection can be executed more reliably.
(5) In the above aspect, the control unit may be configured to: acquire step information on steps of the undercarriage inspection; and operate the actuator corresponding to the inspection portion using the step information. In this aspect, the actuator corresponding to the inspection portion can be operated according to the progress of the steps of the undercarriage inspection. Thus, an appropriate undercarriage inspection can be executed more reliably.

The present disclosure can be implemented not only in the above aspects as an inspection system, but also in other aspects such as a control device, a vehicle, an inspection method, a program for implementing the inspection method, a non-transitory recording medium on which the program is recorded, and a program product.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 illustrates an inspection system according to a first embodiment;
FIG. 2 is a flowchart showing a processing procedure of vehicle traveling control according to the first embodiment;
FIG. 3 illustrates an undercarriage inspection according to the first embodiment;
FIG. 4 is a flowchart of an inspection process according to the first embodiment;
FIG. 5 illustrates an undercarriage inspection according to a second embodiment;
FIG. 6 is a flowchart of an inspection process according to the second embodiment;
FIG. 7 illustrates a schematic configuration of an inspection system according to a third embodiment; and
FIG. 8 is a flowchart showing a processing procedure of vehicle traveling control according to the third embodiment.

### DETAILED DESCRIPTION OF EMBODIMENTS

### A. First Embodiment

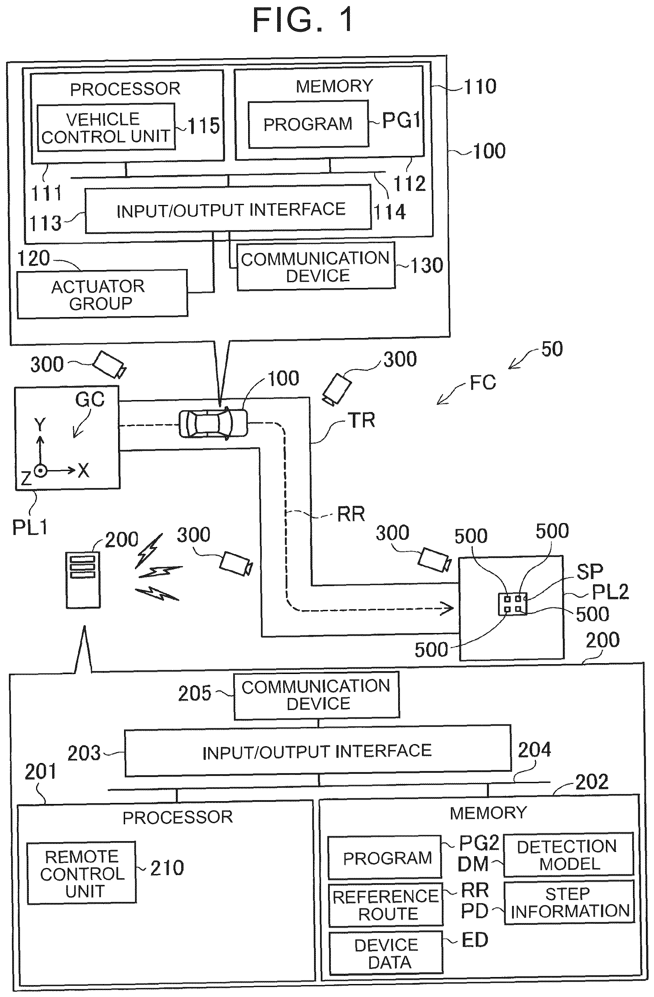

FIG. 1 illustrates an inspection system 50 according to a first embodiment. The inspection system 50 includes one or more vehicles 100, a server 200, one or more external sensors 300, and inspection devices 500.

The vehicle 100 may be a vehicle that travels on wheels or a vehicle that travels on endless tracks, and may be, for example, a passenger car, a truck, a bus, a two-wheeled vehicle, a four-wheeled vehicle, or a construction vehicle. The vehicle 100 includes a battery electric vehicle (BEV), a gasoline-powered vehicle, a hybrid electric vehicle, and a fuel cell electric vehicle.

The vehicle 100 can travel by unattended driving. The term "unattended driving" means driving that is not based on a traveling operation by an occupant. The traveling operation refers to an operation related to at least one of "moving," "turning," and "stopping" of the vehicle 100. The unattended driving is implemented through automatic or manual remote control using a device located outside the vehicle 100, or through autonomous control by the vehicle 100. The vehicle 100 traveling by unattended driving may have occupants on board who do not perform the traveling operation. Examples of the occupants who do not perform the traveling operation include persons simply seated in seats of the vehicle 100, and persons performing tasks other than the traveling operation, such as assembly, inspection, and operation on switches, while being on board the vehicle 100. Driving through the traveling operation by an occupant is sometimes referred to as "attended driving."

The term "remote control" herein includes "full remote control" in which all operations of the vehicle 100 are completely determined from outside the vehicle 100, and "partial remote control" in which part of the operations of the vehicle 100 is determined from outside the vehicle 100. The term "autonomous control" includes "full autonomous control" in which the vehicle 100 autonomously controls its operations without receiving any information from devices outside the vehicle 100, and "partial autonomous control" in which the vehicle 100 autonomously controls its operations using information received from devices outside the vehicle 100.

Control for implementing the unattended driving, such as the remote control or the autonomous control, is also referred to as "unattended driving control."

In the present embodiment, the inspection system 50 is used in a factory FC where the vehicle 100 is manufactured. The reference coordinate system of the factory FC is a global coordinate system GC, and any position in the factory FC can be represented by X, Y, and Z coordinates in the global coordinate system GC. The factory FC includes a first location PL1 and a second location PL2. The first location PL1 and the second location PL2 are connected by a travel path TR along which the vehicle 100 can travel. In the present embodiment, an undercarriage inspection of the vehicle 100 is executed at the second location PL2. The inspection devices 500 for the undercarriage inspection are disposed at the second location PL2. Details of the undercarriage inspection and the inspection devices 500 will be described later.

The external sensors 300 are located outside the vehicle 100. In the present embodiment, the external sensors 300 are cameras. The camera serving as the external sensor 300 captures an image of the vehicle 100 and outputs the captured image as a detection result. The external sensor 300 includes a communication device (not shown) and can communicate with other devices such as the server 200 by wired or wireless communication. The external sensors 300 are installed along the travel path TR in the factory FC. The positions of the external sensors 300 in the factory FC are adjusted in advance.

The vehicle 100 includes a vehicle control device 110 for controlling each part of the vehicle 100, an actuator group 120 including one or more actuators that are driven under the control of the vehicle control device 110, and a communication device 130 for communicating with external devices such as the server 200 by wireless communication. The actuator group 120 includes an actuator of an acceleration device for accelerating the vehicle 100, an actuator of a steering device for changing the traveling direction of the vehicle 100, and an actuator of a braking device for decelerating the vehicle 100.

The vehicle control device 110 is a computer including a processor 111, a memory 112, an input/output interface 113, and an internal bus 114. The processor 111, the memory 112, and the input/output interface 113 are connected via the internal bus 114 to bidirectionally communicate with each other. The actuator group 120 and the communication device 130 are connected to the input/output interface 113. The processor 111 implements various functions including a function as a vehicle control unit 115 by executing a program PG1 stored in the memory 112.

The vehicle control unit 115 causes the vehicle 100 to travel by controlling the actuator group 120. The vehicle control unit 115 can cause the vehicle 100 to travel by controlling the actuator group 120 using a traveling control signal received from the server 200. The traveling control signal is a control signal for causing the vehicle 100 to travel. In the present embodiment, the traveling control signal includes an acceleration and a steering angle of the vehicle 100 as parameters. In other embodiments, the traveling control signal may include the speed of the vehicle 100 as a parameter instead of or in addition to the acceleration of the vehicle 100.

The server 200 is a computer including a processor 201, a memory 202, an input/output interface 203, and an internal bus 204. The processor 201, the memory 202, and the input/output interface 203 are connected via the internal bus 204 to bidirectionally communicate with each other. A communication device 205 for communicating with various devices outside the server 200 is connected to the input/output interface 203. The communication device 205 can communicate with the vehicle 100 by wireless communication, and can communicate with each external sensor 300 by wired or wireless communication. The memory 202 stores various types of information such as a program PG2, a detection model DM, a reference route RR, step information PD, and device data ED. The processor 201 implements various functions including a function as a remote control unit 210 by executing the program PG2 stored in the memory 202. The remote control unit 210 in the present embodiment corresponds to a "control unit" in the present disclosure.

The remote control unit 210 generates a traveling control signal for controlling the actuator group 120 of the vehicle 100, and transmits the traveling control signal to the vehicle 100, thereby causing the vehicle 100 to travel by remote control. The remote control unit 210 may generate and output not only the traveling control signal but also control signals for controlling various auxiliary devices such as an air conditioner provided in the vehicle 100 and actuators that operate various types of equipment such as wipers and lamps. That is, the remote control unit 210 may operate the various types of equipment and the various auxiliary devices by remote control.

As described later, during the undercarriage inspection of the vehicle 100, the remote control unit 210 operates actuators corresponding to inspection portions of the vehicle 100 by remote control.

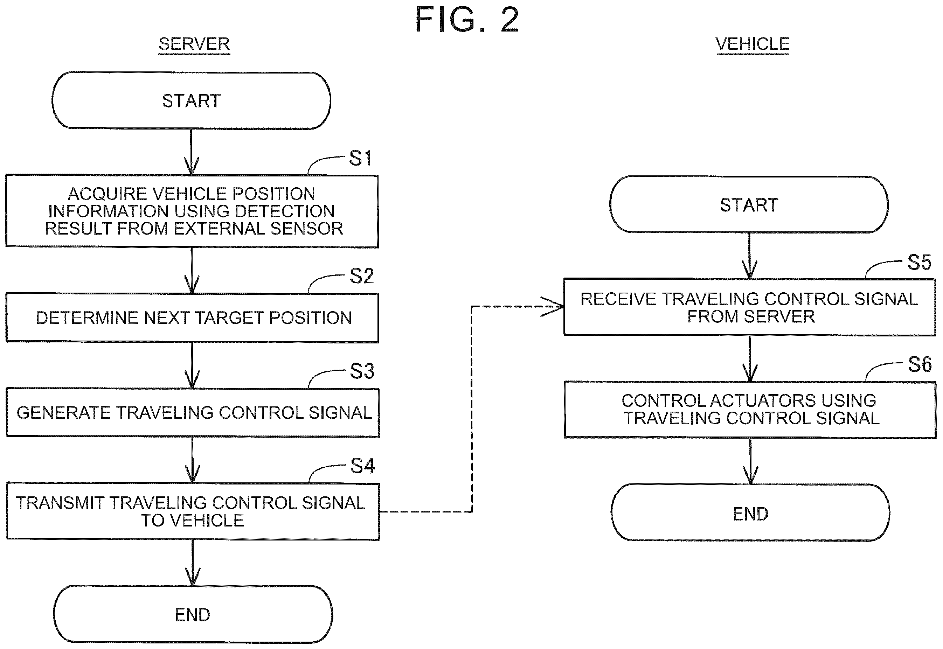

FIG. 2 is a flowchart showing a processing procedure of traveling control for the vehicle 100 according to the first embodiment. In the processing procedure in FIG. 2, the processor 201 of the server 200 functions as the remote control unit 210, and the processor 111 of the vehicle 100 functions as the vehicle control unit 115.

In step S1, the processor 201 of the server 200 acquires vehicle position information using a detection result output from the external sensor 300. The vehicle position information serves as a basis for generating the traveling control signal. In the present embodiment, the vehicle position information includes the position and orientation of the vehicle 100 in the global coordinate system GC of the factory FC. Specifically, in step S1, the processor 201 acquires the vehicle position information using a captured image acquired from a camera that is the external sensor 300.

Specifically, in step S1, the processor 201 acquires the position of the vehicle 100, for example, by detecting the outer shape of the vehicle 100 from the captured image, calculating the coordinates of the positioning point of the vehicle 100 in a coordinate system of the captured image, that is, a local coordinate system, and converting the calculated coordinates into coordinates in the global coordinate system GC. The outer shape of the vehicle 100 in the captured image can be detected, for example, by inputting the captured image to the detection model DM using artificial intelligence. Examples of the detection model DM include a trained machine learning model that has been trained to achieve either of semantic segmentation and instance segmentation. For example, a convolutional neural network (hereinafter referred to as "CNN") trained through supervised learning using a training dataset can be used as the machine learning model. The training dataset includes, for example, a plurality of training images including the vehicle 100, and a label indicating whether each area in the training images is an area indicating the vehicle 100 or an area indicating a field other than the vehicle 100. During training of the CNN, parameters of the CNN are preferably updated to reduce a deviation between the result output from the detection model DM and the label through backpropagation. The processor 201 can acquire the orientation of the vehicle 100 by estimating the orientation, for example, based on the direction of a movement vector of the vehicle 100 calculated from variations in position of feature points of the vehicle 100 between frames of the captured image using an optical flow method.

In step S2, the processor 201 of the server 200 determines a target position to which the vehicle 100 is expected to move next. In the present embodiment, the target position is represented by X, Y, and Z coordinates in the global coordinate system GC. The memory 202 of the server 200 prestores a reference route RR along which the vehicle 100 is expected to travel. The route is represented by a node indicating a departure point, nodes indicating waypoints, a node indicating a destination, and links connecting the nodes. The processor 201 determines the target position to which the vehicle 100 is expected to move next using the vehicle position information and the reference route RR. The processor 201 determines the target position on the reference route RR ahead of the current position of the vehicle 100.

In step S3, the processor 201 of the server 200 generates a traveling control signal for causing the vehicle 100 to travel toward the determined target position. The processor 201 calculates a traveling speed of the vehicle 100 based on transition in the position of the vehicle 100, and compares the calculated traveling speed with a target speed. In general, the processor 201 determines an acceleration such that the vehicle 100 accelerates when the traveling speed is lower than the target speed, and determines an acceleration such that the vehicle 100 decelerates when the traveling speed is higher than the target speed. When the vehicle 100 is located on the reference route RR, the processor 201 determines a steering angle and an acceleration such that the vehicle 100 does not deviate from the reference route RR. When the vehicle 100 is not located on the reference route RR, that is, when the vehicle 100 deviates from the reference route RR, the processor 201 determines a steering angle and an acceleration such that the vehicle 100 returns to the reference route RR.

In step S4, the processor 201 of the server 200 transmits the generated traveling control signal to the vehicle 100. The processor 201 repeats, at a predetermined cycle, the acquisition of the vehicle position information, the determination of the target position, the generation of the traveling control signal, and the transmission of the traveling control signal.

In step S5, the processor 111 of the vehicle 100 receives the traveling control signal transmitted from the server 200. In step S6, the processor 111 of the vehicle 100 controls the actuator group 120 using the received traveling control signal to cause the vehicle 100 to travel at the acceleration and the steering angle indicated by the traveling control signal. The processor 111 repeats, at a predetermined cycle, the reception of the traveling control signal and the control for the actuator group 120. With the inspection system 50 according to the present embodiment, the vehicle 100 can be caused to travel by remote control, and the vehicle 100 can be moved without using transport equipment such as a crane or a conveyor.

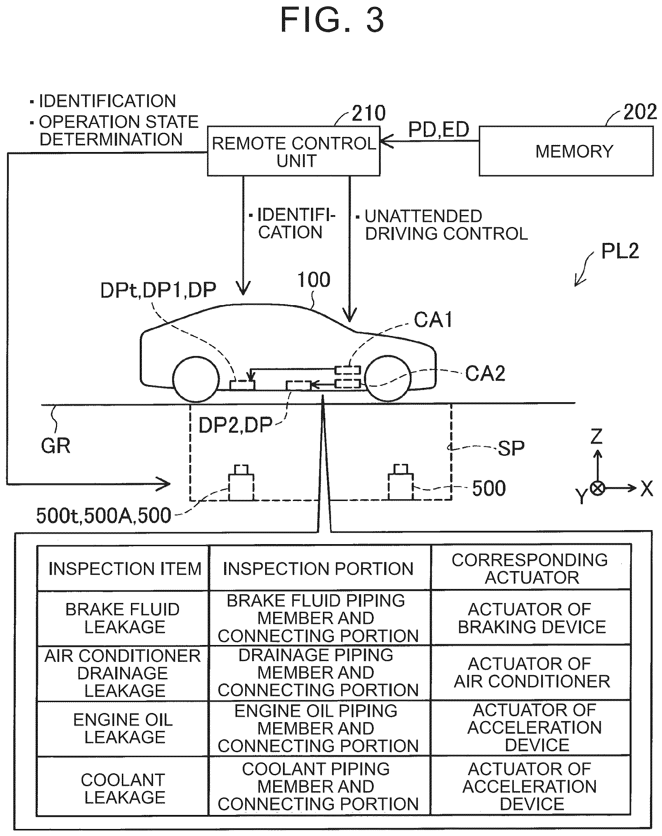

FIG. 3 illustrates the undercarriage inspection according to the present embodiment. In the undercarriage inspection, inspection portions DP of the vehicle 100 are inspected. The inspection portion DP is a portion that is affected by the operation of a corresponding actuator. The corresponding actuator is an actuator corresponding to the inspection portion DP. In the inspection of the inspection portion DP, it is inspected whether an abnormality occurs at the inspection portion DP when the corresponding actuator is operated. FIG. 3 shows inspection portions DP1, DP2 as the inspection portions DP. FIG. 3 also shows an actuator CA1 corresponding to the inspection portion DP1 and an actuator CA2 corresponding to the inspection portion DP2.

The inspection portion DP is inspected by at least one of an inspection using the inspection device 500 and an inspection by an inspection operator. The inspection device 500 is a device to be used to inspect the inspection portion DP. The inspection operator is an operator who inspects the inspection portion DP. In the present embodiment, the inspection portion DP is inspected using the inspection device 500.

In the present embodiment, the inspection device 500 is an imaging device. More specifically, the inspection device 500 is a camera. In the present embodiment, the inspection device 500 that is the imaging device is installed to be oriented upward within an opening of a recess SP provided in a ground GR at the second location PL2 to capture an image of the undercarriage of the vehicle 100 from below. The inspection device 500 includes a communication device (not shown) and can communicate with other devices such as the server 200 by wired or wireless communication. The operation of the inspection device 500 may be controlled, for example, by the server 200. In other embodiments, the inspection device 500 may be an imaging device such as an infrared camera or a light detection and ranging (LiDAR) device. The inspection device 500 may be various non-contact sensors such as a photoelectric sensor or a laser displacement meter, various contact sensors, or operation devices such as a robot including the various sensors.

In the present embodiment, the inspection device 500 observes the inspection portion DP and outputs a result of the observation of the inspection portion DP. More specifically, the inspection device 500 that is the imaging device captures an image of the inspection portion DP and outputs the captured image of the inspection portion DP as the observation result. The inspection portion DP is inspected by analyzing the output observation result. An inspection model may be used to analyze the observation result. The inspection model is, for example, a rule-based system configured to determine the presence or absence or the degree of an abnormality at the inspection portion DP based on the observation result, or a trained machine learning model configured to output information on the presence or absence or the degree of an abnormality at the inspection portion DP based on the observation result. Such an inspection model may be stored in, for example, the memory 112 or the memory 202. The detection result may be analyzed by a user of the inspection system 50. The user is herein, for example, a manager or an operator in the factory FC.

FIG. 3 shows examples of combinations of inspection items, inspection portions DP, and corresponding actuators. The inspection item may represent the type of an abnormality to be inspected for. For example, when the inspection item is "brake fluid leakage," the inspection portion DP is a brake fluid piping member, such as a hose or pipe for the flow of brake fluid, or a connecting portion where such piping members are connected to each other, and the corresponding actuator is the actuator of the braking device. That is, in the inspection for "brake fluid leakage," it is checked whether the brake fluid leaks from the piping member, the connecting portion, etc. when the actuator of the braking device is operated. For example, when the inspection item is "air conditioner drainage leakage," the inspection portion DP is a drainage piping member or a connecting portion for draining water from the air conditioner provided in the vehicle 100, and the corresponding actuator is the actuator of the air conditioner. For example, when the inspection item is "engine oil leakage," the inspection portion DP is an engine oil piping member or a connecting portion for the flow of engine oil, and the corresponding actuator is the actuator of the acceleration device. For example, when the inspection item is "coolant leakage," the inspection portion DP is a coolant piping member or a connecting portion for the flow of a coolant, and the corresponding actuator is the actuator of the acceleration device. The "coolant" herein refers to, for example, a liquid for cooling a drive battery, a drive motor, and a speed reducer provided in the vehicle 100. When the corresponding actuator is the actuator of the acceleration device, it is preferable that the remote control unit 210 operate the actuator of the acceleration device after, for example, the shift position of the vehicle 100 is changed to N range. In this way, the undercarriage inspection can be executed while suppressing the movement of the vehicle 100. The types of the inspection item, the inspection portion DP, and the corresponding actuator and the combinations of the inspection item, the inspection portion DP, and the corresponding actuator are not limited to those described above.

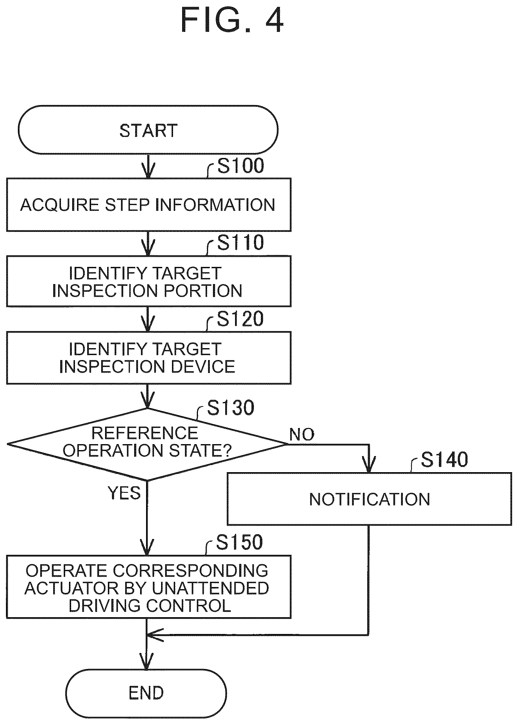

FIG. 4 is a flowchart of an inspection process according to the present embodiment. The inspection process is executed for the undercarriage inspection. The inspection process is started by the processor 201 of the server 200, for example, when the vehicle 100 reaches the second location PL2.

In step S100, the remote control unit 210 acquires the step information PD as shown in FIG. 3. In step S100 in the present embodiment, the remote control unit 210 acquires the step information PD from the memory 202. The step information PD is information on the steps of the undercarriage inspection. In the present embodiment, the step information PD indicates a plurality of inspection steps in the undercarriage inspection and the order of execution of the inspection steps. In each inspection step, one or more inspection portions DP are inspected. In other embodiments, the remote control unit 210 may acquire the step information PD from, for example, a recording medium or a computer outside the server 200.

In step S110 in FIG. 4, the remote control unit 210 identifies a target inspection portion DPt as shown in FIG. 3 using the step information PD acquired in step S100. In step S110 in the present embodiment, the remote control unit 210 identifies the next inspection step using the step information PD, and identifies the inspection portion DP in the next inspection step as the target inspection portion DPt. In the example of FIG. 3, the inspection portion DP1 is identified as the target inspection portion DPt.

In step S120 in FIG. 4, the remote control unit 210 identifies the inspection device 500 to be used to inspect the target inspection portion DPt identified in step S110 as a target inspection device 500t as shown in FIG. 3. In the example of FIG. 3, an inspection device 500A is identified as the target inspection device 500t. In step S120 in the present embodiment, the remote control unit 210 acquires the device data ED from the memory 202 and identifies the target inspection device 500t using the acquired device data ED. In the device data ED, information indicating the inspection portion DP and information indicating the inspection device 500 are stored in association with each other. That is, the device data ED is data that can identify the inspection device 500 to be used to inspect the inspection portion DP. In other embodiments, the remote control unit 210 may acquire the device data ED from, for example, a recording medium or a computer outside the server 200.

In step S130 in FIG. 4, the remote control unit 210 executes operation state determination. In the operation state determination, the remote control unit 210 determines whether the operation state of the target inspection device 500t is a predetermined reference operation state. The reference operation state is defined as, for example, an operation state suitable for inspecting the inspection portion DP. In the present embodiment, the reference operation state includes, for example, a state in which the inspection device 500 is powered ON, no communication failure occurs in the inspection device 500, and no abnormality occurs in the image captured by the inspection device 500. The "abnormality in the captured image" herein means, for example, that the captured image is missing, the captured image contains a foreign object, or the captured image contains noise at a predetermined level or more. The reference operation state may be defined, for example, for each inspection device 500.

When determination is made in step S130 that the operation state is not the reference operation state, the remote control unit 210 notifies the user about notification information in step S140, and terminates the inspection process. The notification information in step S140 includes, for example, abnormality information indicating an abnormality. In step S140, the remote control unit 210 gives the notification information using, for example, an output device (not shown). The output device is a display device such as a display that outputs visual information, or a speaker that outputs audio information. The output device may be a mobile terminal such as a tablet or smartphone owned by the user.

In other embodiments, when determination is made in step S130 that the operation state is not the reference operation state, the remote control unit 210 may, for example, transmit a control signal to the inspection device 500 to resolve the abnormality and return the process to step S130.

When determination is made in step S130 that the operation state is the reference operation state, the remote control unit 210 operates, in step S150, the corresponding actuator corresponding to the target inspection portion DPt identified in step S100 by unattended driving control. At this time, the target inspection portion DPt is inspected using the target inspection device 500t. In the example of FIG. 3, the actuator CA1 corresponding to the inspection portion DP1 is operated by the unattended driving control, and the inspection portion DP1 is inspected using the inspection device 500A.

In the inspection system 50 of the present embodiment described above, the actuator corresponding to the target inspection portion DPt is operated by the unattended driving control during the undercarriage inspection. This eliminates the need for manpower on board the vehicle 100 to operate the vehicle in order to operate the actuator corresponding to the target inspection portion DPt. Thus, the manpower can be saved in the undercarriage inspection.

In the present embodiment, the actuator corresponding to the target inspection portion DPt is operated when determination is made that the operation state of the target inspection device 500t to be used to inspect the target inspection portion DPt is the reference operation state. Therefore, the actuator corresponding to the target inspection portion DPt can be operated after confirming that the operation state of the target inspection device 500t to be used to inspect the target inspection portion DPt is appropriate. Thus, an appropriate undercarriage inspection can be executed more reliably.

In the present embodiment, the corresponding actuator is operated using the step information PD of the undercarriage inspection. Therefore, the corresponding actuator can be operated according to the progress of the steps of the undercarriage inspection. Thus, an appropriate undercarriage inspection can be executed more reliably.

### B. Second Embodiment

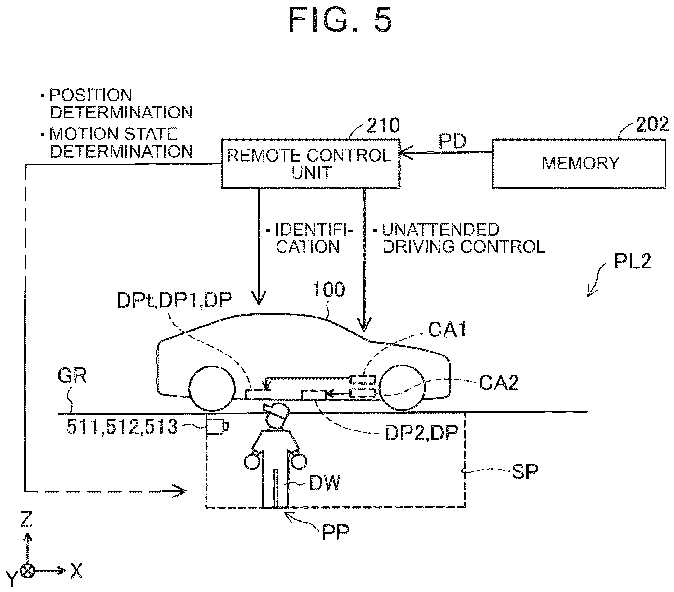

FIG. 5 illustrates an undercarriage inspection according to a second embodiment. The present embodiment differs from the first embodiment in that the inspection portion DP is inspected by an inspection operator DW. The inspection operator DW may inspect the undercarriage using, for example, a tool. The inspection operator DW may inspect the undercarriage, for example, in a visual, tactile, olfactory, or aural way using his or her body. In the present embodiment, the inspection operator DW inspects the undercarriage from below the vehicle 100 within the opening of the recess SP. The inspection system 50 in the second embodiment is similar to that in the first embodiment in terms of the features that are not particularly described.

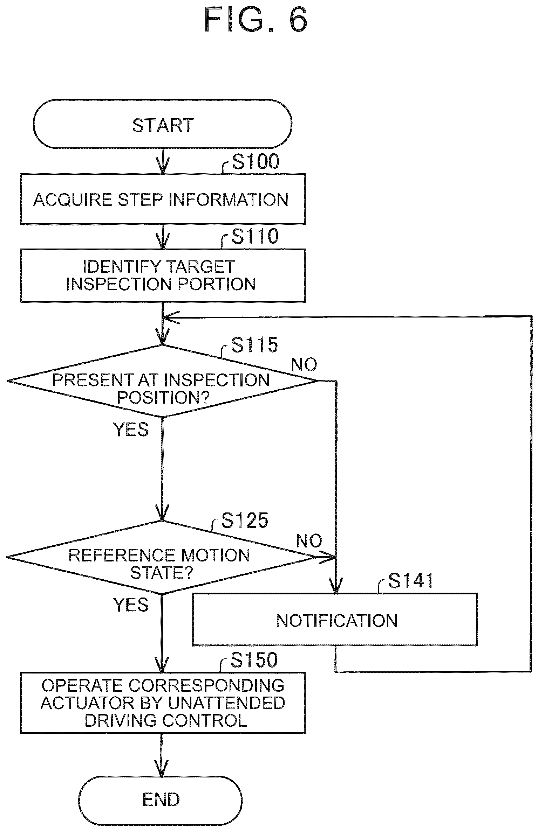

FIG. 6 is a flowchart of an inspection process according to the present embodiment. In FIG. 6, the same steps as those in FIG. 4 are denoted by the same reference signs as those in FIG. 4. In the inspection process of the present embodiment, the device data ED is not used. Therefore, the device data ED need not be stored in the memory 202.

In step S115, the remote control unit 210 executes position determination. In the position determination, as shown in FIG. 5, the remote control unit 210 determines whether the inspection operator DW who is supposed to inspect the target inspection portion DPt is present at a predetermined inspection position PP. The inspection position PP is defined as, for example, a position where the inspection operator DW is preferably located to inspect the inspection portion DP. In the present embodiment, the inspection position PP is a position within the opening of the recess SP. In step S115 in the present embodiment, the remote control unit 210 uses a position detection sensor 511 for detecting the position of the inspection operator DW to determine whether the inspection operator DW is present at the inspection position PP. In the present embodiment, the position detection sensor 511 is a camera 513 installed within the opening of the recess SP at the second location PL2. In other embodiments, the position detection sensor 511 may be, for example, an imaging device other than the camera, various non-contact sensors such as a photoelectric sensor or a laser displacement meter, or various contact sensors for detecting the position of the inspection operator DW. The position detection sensor 511 may be, for example, a wearable sensor attached to the inspection operator DW. Examples of the wearable sensor include a first-person camera, a motion sensor, and a global navigation satellite system (GNSS) sensor. For example, the external sensor 300 may be used as the position detection sensor 511.

In other embodiments, for example, when a different inspection operator is assigned to each inspection portion DP, the remote control unit 210 may identify the inspection operator who is supposed to inspect the target inspection portion DPt, and determine whether the identified inspection operator is present at the inspection position PP. In this case, to identify the inspection operator, data that can identify the inspection operator who is supposed to inspect the inspection portion DP may be used similarly to the device data ED.

When the inspection operator DW is present at the inspection position PP in step S115, the remote control unit 210 executes motion state determination in step S125. In the motion state determination, determination is made as to whether the motion state of the inspection operator DW is a predetermined reference motion state. The reference motion state is defined as, for example, a motion state suitable for inspecting the inspection portion DP. In the present embodiment, the reference motion state includes, for example, a state in which the inspection operator DW takes a predetermined posture and the line of sight of the inspection operator DW is in a predetermined direction. In step S125 in the present embodiment, the remote control unit 210 uses a state detection sensor 512 for detecting the motion state of the inspection operator DW to determine whether the motion state of the inspection operator DW is the reference motion state. In the present embodiment, the state detection sensor 512 is the camera 513. That is, in the present embodiment, the camera 513 functions as both the position detection sensor 511 and the state detection sensor 512. In other embodiments, the state detection sensor 512 may be, for example, an imaging device other than the camera, various non-contact sensors, or various contact sensors similarly to the position detection sensor 511. The state detection sensor 512 may be, for example, a wearable sensor attached to the inspection operator DW or the external sensor 300.

When the motion state of the inspection operator DW is the reference motion state in step S125, the remote control unit 210 operates the corresponding actuator by the unattended driving control in step S150 as in the first embodiment. At this time, the target inspection portion DPt is inspected by the inspection operator DW. In the example of FIG. 5, the actuator CA1 corresponding to the inspection portion DP1 is operated by the unattended driving control, and the inspection portion DP1 is inspected by the inspection operator DW.

When the inspection operator DW is not present at the inspection position PP in step S115 or when the motion state of the inspection operator DW is not the reference motion state in step S125, the remote control unit 210 notifies the user about notification information in step S141. The notification information in step S141 may include, for example, abnormality information, a message for causing the inspection operator DW to be present at the inspection position PP, or a message for causing the inspection operator DW to assume the reference motion state. After step S141 is completed, the remote control unit 210 returns the process to step S115.

In other embodiments, when the inspection operator DW is not present at the inspection position PP or when the motion state of the inspection operator DW is not the reference motion state in step S125, the remote control unit 210 may terminate the inspection process with or without the notification information.

In the inspection system 50 of the second embodiment described above, the corresponding actuator is operated when determination is made that the inspection operator DW is present at the inspection position PP. In this way, the actuator corresponding to the inspection portion DP can be operated after confirming that the inspection operator DW who is supposed to inspect the inspection portion DP is present at the appropriate position. Thus, an appropriate undercarriage inspection can be executed more reliably.

In the present embodiment, the actuator corresponding to the inspection portion DP is operated when determination is made that the motion state of the inspection operator DW who is supposed to inspect the inspection portion DP is the reference motion state. In this way, the actuator corresponding to the inspection portion DP can be operated after confirming that the motion state of the inspection operator DW who is supposed to inspect the inspection portion DP is appropriate. Thus, an appropriate undercarriage inspection can be executed more reliably.

In the first and second embodiments, for example, the inspection using the inspection device 500 and the inspection by the inspection operator DW may be executed in combination. In this case, the inspection device 500 may be used as the position detection sensor 511 and the state detection sensor 512.

### C. Third Embodiment

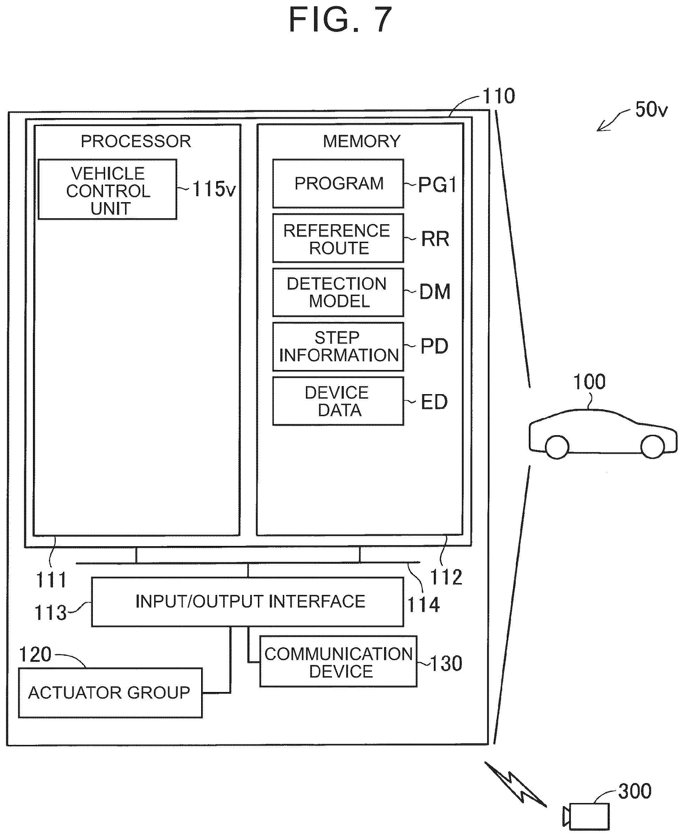

FIG. 7 illustrates a schematic configuration of an inspection system 50v according to a third embodiment. The present embodiment differs from the first embodiment in that the inspection system 50v does not include the server 200. The vehicle 100 in the present embodiment can travel by autonomous control on the vehicle 100. The other configuration is similar to that in the first embodiment unless otherwise specified.

In the present embodiment, the communication device 130 of the vehicle 100 can communicate with the external sensor 300 and the inspection device 500. The processor 111 of the vehicle control device 110 implements a function as a vehicle control unit 115v by executing the program PG1 stored in the memory 112. The vehicle control unit 115v acquires output results from the sensors, generates a traveling control signal using the output results, and outputs the generated traveling control signal to operate the actuator group 120. Thus, the vehicle 100 can travel by autonomous control. During the undercarriage inspection of the vehicle 100, the vehicle control unit 115v operates the corresponding actuator by autonomous control. In the present embodiment, the memory 112 prestores the detection model DM, the reference route RR, the step information PD, and the device data ED in addition to the program PG1. The vehicle control unit 115v in the third embodiment corresponds to the "control unit" in the present disclosure.

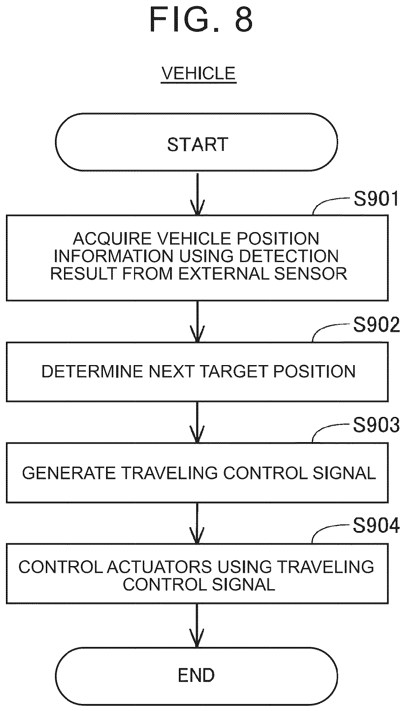

FIG. 8 is a flowchart showing a processing procedure of traveling control for the vehicle 100 according to the third embodiment. In the processing procedure of FIG. 8, the processor 111 of the vehicle 100 functions as the vehicle control unit 115v by executing the program PG1.

In step S901, the processor 111 of the vehicle control device 110 acquires vehicle position information using a detection result output from the camera that is the external sensor 300. In step S902, the processor 111 determines a target position to which the vehicle 100 is expected to move next. In step S903, the processor 111 generates a traveling control signal for causing the vehicle 100 to travel toward the determined target position. In step S904, the processor 111 controls the actuator group 120 using the generated traveling control signal to cause the vehicle 100 to travel based on parameters indicated by the traveling control signal. The processor 111 repeats, at a predetermined cycle, the acquisition of the vehicle position information, the determination of the target position, the generation of the traveling control signal, and the control on the actuators. With the inspection system 50v according to the present embodiment, the vehicle 100 can travel by the autonomous control on the vehicle 100 even though the vehicle 100 is not remotely controlled by the server 200.

In the present embodiment, the vehicle control unit 115v of the vehicle control device 110 executes the same inspection process as that shown in FIG. 4 or 6. For example, in step S150 in the present embodiment, the corresponding actuator is operated by the autonomous control on the vehicle 100.

In the inspection system 50v of the third embodiment described above, the actuator corresponding to the target inspection portion DPt is operated by the unattended driving control. Thus, the manpower can be saved in the undercarriage inspection.

### D. Other Embodiments

(D1) In the first embodiment, the corresponding actuator is operated when the operation state determination is made that the operation state of the inspection device 500 is the reference operation state. However, the present disclosure is not limited to this. For example, the corresponding actuator may be operated without executing the operation state determination.

(D2) In the second embodiment, the position determination and the motion state determination are executed, but the present disclosure is not limited to this. For example, the corresponding actuator may be operated after only one of the position determination and the motion state determination is executed. The corresponding actuator may be operated without executing either of the position determination and the motion state determination.

(D3) In the above embodiments, the corresponding actuator is operated using the step information PD. However, the corresponding actuator may be operated without using the step information PD.

(D4) In the above embodiments, the vehicle 100 may have part of the functions of the control unit, namely the functions as an operation state determination unit that executes the operation state determination, a position determination unit that executes the position determination, a motion state determination unit that executes the motion state determination, and an acquisition unit that acquires the step information PD, and the server 200 may have the other functions. In the inspection system 50, part or all of these functions may be provided in, for example, an external device different from the server 200 and the vehicle 100.

(D5) In the above embodiments, the external sensor 300 is not limited to the camera, and may be, for example, a ranging device. The ranging device is, for example, a light detection and ranging (LiDAR) device. In this case, the detection result output from the external sensor 300 may be three-dimensional point cloud data representing the vehicle 100.

(D6) In the first embodiment, the server 200 executes the process from the acquisition of vehicle position information to the generation of a traveling control signal. Alternatively, the vehicle 100 may execute at least part of the process from the acquisition of vehicle position information to the generation of a traveling control signal. For example, the following aspects (1) to (3) may be adopted.
(1) The server 200 may acquire vehicle position information, determine a target position to which the vehicle 100 is expected to move next, and generate a route from the current position of the vehicle 100 indicated by the acquired vehicle position information to the target position. The server 200 may generate a route to a target position between the current position and the destination, or may generate a route to the destination. The server 200 may transmit the generated route to the vehicle 100. The vehicle 100 may generate a traveling control signal such that the vehicle 100 travels on the route received from the server 200, and control the actuator group 120 using the generated traveling control signal.
(2) The server 200 may acquire vehicle position information and transmit the acquired vehicle position information to the vehicle 100. The vehicle 100 may determine a target position to which the vehicle 100 is expected to move next, generate a route from the current position of the vehicle 100 indicated by the received vehicle position information to the target position, generate a traveling control signal such that the vehicle 100 travels on the generated route, and control the actuator group 120 using the generated traveling control signal.
(3) In the above aspects (1) and (2), an internal sensor may be mounted on the vehicle 100 and a detection result output from the internal sensor may be used in at least one of the generation of a route and the generation of a traveling control signal. The internal sensor is mounted on the vehicle 100. Specific examples of the internal sensor may include a camera, a LiDAR, a millimeter wave radar, an ultrasonic sensor, a global positioning system (GPS) sensor, an acceleration sensor, and a gyro sensor. For example, in the above aspect (1), the server 200 may acquire a detection result from the internal sensor and reflect the detection result from the internal sensor in a route when generating the route. In the above aspect (1), the vehicle 100 may acquire a detection result from the internal sensor and reflect the detection result from the internal sensor in a traveling control signal when generating the traveling control signal. In the above aspect (2), the vehicle 100 may acquire a detection result from the internal sensor and reflect the detection result from the internal sensor in a route when generating the route. In the above aspect (2), the vehicle 100 may acquire a detection result from the internal sensor and reflect the detection result from the internal sensor in a traveling control signal when generating the traveling control signal.

(D7) In the third embodiment, an internal sensor may be mounted on the vehicle 100 and a detection result output from the internal sensor may be used in at least one of the generation of a route and the generation of a traveling control signal. For example, the vehicle 100 may acquire a detection result from the internal sensor and reflect the detection result from the internal sensor in a route when generating the route. The vehicle 100 may acquire a detection result from the internal sensor and reflect the detection result from the internal sensor in a traveling control signal when generating the traveling control signal.

(D8) In the third embodiment, the vehicle 100 acquires the vehicle position information using the detection result from the external sensor 300. An internal sensor may be mounted on the vehicle 100, and the vehicle 100 may acquire vehicle position information using a detection result from the internal sensor, determine a target position to which the vehicle 100 is expected to move next, generate a route from the current position of the vehicle 100 indicated by the acquired vehicle position information to the target position, generate a traveling control signal such that the vehicle 100 travels on the generated route, and control the actuator group 120 using the generated traveling control signal. In this case, the vehicle 100 can travel without using the detection result from the external sensor 300. The vehicle 100 may acquire a target arrival time and traffic congestion information from the outside of the vehicle 100, and reflect the target arrival time or the traffic congestion information in at least one of the route and the traveling control signal. All the functional components of the inspection system 50v may be provided in the vehicle 100. That is, the process implemented by the inspection system 50v in the present disclosure may be implemented by the vehicle 100 alone.

(D9) In the first embodiment, the server 200 automatically generates a traveling control signal to be transmitted to the vehicle 100. The server 200 may generate the traveling control signal to be transmitted to the vehicle 100 in response to an operation by an external operator outside the vehicle 100. For example, the external operator may operate a manipulation device including a display that displays a captured image output from the external sensor 300, a steering wheel, an accelerator pedal, and a brake pedal that are used to remotely operate the vehicle 100, and a communication device that communicates with the server 200 by wired or wireless communication, and the server 200 may generate a traveling control signal in response to an operation performed on the manipulation device.

(D10) In the above embodiments, the vehicle 100 only needs to include components that enable movement by unattended driving, and may be, for example, in the form of a platform including the following components. Specifically, the vehicle 100 only needs to include at least the vehicle control device 110 and the actuator group 120 to implement three functions including "running," "turning," and "stopping" by unattended driving. In order for the vehicle 100 to acquire information from the outside for unattended driving, the vehicle 100 only needs to include the communication device 130. That is, at least part of interior components such as a driver's seat or a dashboard, at least part of exterior components such as a bumper or a fender, or a body shell may be omitted from the vehicle 100 that is movable by unattended driving. In this case, the remaining components such as the body shell may be mounted on the vehicle 100 before the vehicle 100 is shipped from the factory FC, or may be mounted on the vehicle 100 after the vehicle 100 is shipped from the factory FC with the remaining components such as the body shell unmounted on the vehicle 100. The components may be mounted on the vehicle 100 from any side such as the upper side, the lower side, the front side, the rear side, the right side, or the left side, and may be mounted from the same side or from different sides. Also in the form of a platform, the position may be determined as with the vehicle 100 according to the first embodiment.

(D11) The vehicle 100 may be manufactured by combining a plurality of modules. A module refers to a unit composed of one or more components grouped according to the structure and function of the vehicle 100. For example, the platform of the vehicle 100 may be manufactured by combining a front module constituting a front part of the platform, a central module constituting a central part of the platform, and a rear module constituting a rear part of the platform. The number of modules constituting the platform is not limited to three, and may be two or less or four or more. Part of the vehicle 100 other than the platform may be modularized in addition to or instead of the platform. The various modules may include any exterior component such as a bumper or a grille, or any interior component such as a seat or a console. For example, such modules may be manufactured by joining a plurality of components by welding, using a fixture, etc., or may be manufactured by integrally molding at least part of the modules as a single component by casting. The molding method for integrally molding at least part of the modules as a single component is also referred to as gigacasting or megacasting. With the gigacasting, each part of the vehicle 100 that has hitherto been formed by joining a plurality of components can be formed as a single component. For example, the front module, the central module, and the rear module may be manufactured by gigacasting.

(D12) Transport of the vehicle 100 through unattended driving of the vehicle 100 is called "self-propelled transport." The configuration for implementing the self-propelled transport is called "vehicle remote control autonomous driving transport system." The method of producing the vehicle 100 using the self-propelled transport is called "self-propelled production." In the self-propelled production, for example, at least part of the transport of the vehicle 100 in the factory FC that manufactures the vehicle 100 is implemented by the self-propelled transport.

In the above embodiments, part or all of the functions and processes implemented by software may be implemented by hardware. Part or all of the functions and processes implemented by hardware may be implemented by software. Examples of hardware that may be used for implementing the various functions in the above embodiments include various types of circuit such as integrated circuits and discrete circuits.

The present disclosure is not limited to the above embodiments, and can be implemented by a variety of configurations without departing from the spirit of the present disclosure. For example, the technical features in each embodiment corresponding to the technical features in each aspect described in "SUMMARY OF THE INVENTION" can be replaced or combined as appropriate in order to solve part or all of the above issues or achieve part or all of the above effects. When the technical features are not described as being essential herein, these features can be omitted as appropriate.

## Claims

1. An inspection system comprising:
a vehicle configured to travel by unattended driving control; and
a control unit configured to operate one or more actuators mounted on the vehicle by the unattended driving control, wherein
the control unit is configured to, during an undercarriage inspection of the vehicle, operate the actuator corresponding to an inspection portion of the vehicle by the unattended driving control.

2. The inspection system according to claim 1, wherein the control unit is configured to:
determine whether an operation state of an inspection device to be used to inspect the inspection portion is a predetermined state; and
operate the actuator corresponding to the inspection portion when determination is made that the operation state is the predetermined state.

3. The inspection system according to claim 1, wherein the control unit is configured to:
determine whether an inspection operator who is supposed to inspect the inspection portion is present at a predetermined inspection position; and
operate the actuator corresponding to the inspection portion when determination is made that the inspection operator is present at the inspection position.

4. The inspection system according to claim 1, wherein the control unit is configured to:
determine whether a motion state of an inspection operator who is supposed to inspect the inspection portion is a predetermined state; and
operate the actuator corresponding to the inspection portion when determination is made that the motion state is the predetermined state.

5. The inspection system according to any one of claims 1 to 4, wherein the control unit is configured to:
acquire step information on steps of the undercarriage inspection; and
operate the actuator corresponding to the inspection portion using the step information.
